# EUROPÄISCHE PATENTANMELDUNG

(11) **EP 4 623 775 A1**
(43) Veröffentlichungstag der Anmeldung: **01.10.2025**
(21) Anmeldenummer: 25162880.6
(22) Anmeldetag: 11.03.2025
(51) Int. Cl.: A47K 3/40

(54) **SANITÄREINRICHTUNG UND VERFAHREN ZUR HERSTELLUNG EINER SANITÄREINRICHTUNG**

(30) Priorität: 26.03.2024 DE 102024108570; 22.08.2024 DE 102024124063
(71) Anmelder: Franz Kaldewei GmbH & Co. KG, 59229 Ahlen (DE)
(72) Erfinder:
(74) Vertreter: Andrejewski - Honke Patent- und Rechtsanwälte Partnerschaft mbB

(57) **Zusammenfassung**

Die Erfindung betrifft eine Sanitäreinrichtung mit einem eine Nutzseite (2) aufweisenden Hauptkörper (1) aus emailliertem Stahlblech, wobei an einer nicht-ebenen Verdecktseite (3) des Hauptkörpers (1) ein Volumenmaterial (7) angeordnet ist, welches zumindest abschnittsweise eine zu der nicht-ebenen Verdecktseite (3) komplementäre Topografie aufweist. Erfindungsgemäß ist vorgesehen, dass das Volumenmaterial (7) von einem aus Partikeln (8) gebildeten Schüttgut und einem die Partikel (8) verbindenden ausgehärteten Bindemittel (9) gebildet ist.

## Beschreibung

Die Erfindung betrifft eine Sanitäreinrichtung mit einem eine Nutzseite aufweisenden Hauptkörper aus emaillierten Stahlblech, wobei an einer nicht-ebenen Verdecktseite des Hauptkörpers ein Volumenmaterial angeordnet ist, welches zumindest abschnittsweise eine zu der nicht-ebenen Verdecktseite komplementäre Topographie aufweist. Gegenstand der Erfindung ist des Weiteren auch ein Verfahren zur Herstellung einer solchen Sanitäreinrichtung.

Der Hauptkörper kann beispielsweise in der Form einer Badewanne, einer Duschwanne, eines Urinals, eines Waschbeckens, eines Heizkörpers, einer Verkleidung oder dergleichen gebildet sein.

Als Nutzseite wird bei einem derartigen Hauptkörper im Rahmen der Erfindung die Seite verstanden, welche im montierten Zustand für einen Benutzer sichtbar ist. Dabei versteht sich, dass die Nutzseite in der Regel nicht eben ist, sondern eine dreidimensionale Kontur, beispielsweise eine Beckenform, aufweist.

Die Verdecktseite ist dagegen im vollständig montierten Zustand in der Regel nicht oder nicht unmittelbar sichtbar. Es kann sich je nach Montage des Sanitärkörpers um eine Rückseite, eine Unterseite oder auch einen Innenraum handeln.

In vielen Anwendungsfällen kann die Nutzseite auch als Sichtseite bezeichnet werden. Wenn an der Verdecktseite eine Montage des Sanitärkörpers vorgesehen ist, so kann dies auch als Montageseite bezeichnet werden.

Die Verdecktseite ist nicht-eben. Damit ist im Rahmen der Erfindung gemeint, dass diese eine über eine Rauigkeit oder Welligkeit der entsprechenden Oberfläche hinausgehende makroskopische dreidimensionale Struktur aufweist.

Die vorliegende Erfindung bezieht sich konkret auf eine Sanitäreinrichtung, bei der der Hauptkörper aus emaillierten Stahlblech, also aus Stahl-Emaille gebildet ist. Der Hauptkörper ist dann üblicherweise durch Blechumformung mit einer anschließenden Emaillierung gebildet, sodass die Nutzseite und die Verdecktseite üblicherweise eine zueinander komplementäre Formgebung aufweisen. Die nicht-ebene Form der Verdecktseite ist dann invers zu der Nutzseite, welche eine dreidimensionale Funktions- und/oder Dekorstruktur aufweist.

Eine gattungsgemäße Sanitäreinrichtung ist aus der DE 10 2022 128 990 B3 bekannt. An der Verdecktseite ist ein Verbundmaterial als Formkörper angeordnet, welches eine Vielzahl von Partikeln aufweist, die durch ein Netzwerk aus Mycel-Material verbunden sind. Für die Ausbildung des Formkörpers mit einem Netzwerk Mycel-Material sind insbesondere organische Partikel aus pflanzlichem Material geeignet. Pflanzliches Material wie Hanf, Stroh, Holzspäne, Gräser und pflanzliche Abfallprodukte erlauben dann bei geeigneten Umgebungsbedingungen wie einer geeigneten Feuchte und Wärme während der Herstellung die Ausbildung des Netzwerkes aus Mycel-Material.

Dieses biobasierte Verbundmaterial weist in Kombination mit üblichen Sanitärkörpern eine hinreichende Stabilität, Festigkeit und Beständigkeit auf. Auf vorteilhafte Weise werden bei einer guten Funktionalität verbesserte ökologische Eigenschaften erreicht.

Eine weitere gattungsgemäße Sanitäreinrichtung ist aus der DE 199 61 255 C2 bekannt, wobei Polyurethanschaum als Volumenmaterial einen Wannenträger bildet. Der Wannenträger wird derart durch Aufschäumen gebildet, dass der Polyurethanschaum einen Rand der Wanne hintergreift und so eine formschlüssige Verbindung resultiert. Des Weiteren ist bekannt, dass Polyurethanschaum eine gewisse Klebrigkeit aufweist, sodass insgesamt ein integraler Verbundkörper gebildet wird. Durch das vollflächig unter dem Sanitärkörper angeordnete Volumenmaterial in Form von Polyurethanschaum wird eine gute thermische und akustische Dämmung erreicht. Die Handhabung der Sanitäreinrichtung am Ende eines Lebenszyklus ist jedoch schwierig, weil der Polyurethanschaum innig mit der Wanne aus Stahl-Emaille verbunden ist.

Der vorliegenden Erfindung liegt die Aufgabe zugrunde, eine Sanitäreinrichtung anzugeben, die hinsichtlich der Ausgestaltung des Hauptkörpers aus emailliertem Stahlblech weitere Variationsmöglichkeiten erlaubt und aus ökologischer Sicht vorteilhaft ist. Des Weiteren soll ein Verfahren zur Herstellung einer entsprechenden Sanitäreinrichtung angegeben werden.

Gegenstand der Erfindung und Lösung der Aufgabe sind eine Sanitäreinrichtung gemäß Patentanspruch 1 sowie ein Verfahren zur Herstellung einer Sanitäreinrichtung gemäß Patentanspruch 17.

Ausgehend von einer gattungsgemäßen Ausgestaltung ist demnach vorgesehen, dass das Volumenmaterial von einem aus Partikeln gebildeten Schüttgut und einem die Partikel verbindenden ausgehärteten Bindemittel gebildet ist.

Im Rahmen der Erfindung kann das Volumenmaterial aus den Partikeln und dem ausgehärteten Bindemittel mit einer besonders hohen Stabilität und Festigkeit gebildet werden.

Gemäß dem Stand der Technik nach der DE 10 2020 128 990 B3 und der DE 199 61 255 C2 wird die Stabilität der Sanitäreinrichtung im Wesentlichen von dem aus Stahl-Emaille gebildeten Hauptkörper bereitgestellt, während dann das Volumenmaterial je nach Anwendungsfall den Hauptkörper sowie gegebenenfalls auch einen darauf stehenden Benutzer tragen und abstützen soll. Gemäß dem Stand der Technik ist aber der Hauptkörper aus Stahl-Emaille dann an sich so steif und tragfähig, dass bereits in dem Hauptkörper selbst das Gewicht eines Benutzers getragen und verteilt werden kann.

Im Rahmen der Erfindung kann das Volumenmaterial dagegen eine solche Festigkeit aufweisen, dass diese die bisherigen Anforderungen an eine reine Trag- und Abstützfunktion wesentlich übersteigt. Im Rahmen der Erfindung können also der Hauptkörper und das Volumenmaterial auch auf besonders vorteilhafte Weise eine Verbundanordnung bilden, wobei dann auch wesentlich das Volumenmaterial zu der gesamten Stabilität und Tragfähigkeit beitragen kann.

Vor diesem Hintergrund kann der Hauptkörper aus emailliertem Stahlblech, beispielsweise in Form einer Duschfläche oder Sanitärwanne, eine übliche und aus dem Stand der Technik bekannte Struktur und Festigkeit aufweisen.

Darüber hinaus ist es jedoch im Rahmen der Erfindung auch möglich, den Hauptkörper aus emaillierten Stahlblech mit einer geringeren eigenen Festigkeit zu bilden, wobei dann bei der gefertigten Sanitäreinrichtung die Gesamtstabilität auch zu einem erheblichen Anteil von dem Volumenmaterial bereitgestellt wird. Auf die in diesem Zusammenhang resultierenden Vorteile und Variationsmöglichkeiten wird nachfolgend noch im Detail eingegangen.

Im Lichte der Erfindung kann das Volumenmaterial aus den Partikeln und dem ausgehärteten Bindemittel grundsätzlich auch für Sanitäreinrichtungen mit einem Hauptkörper aus einem anderen Material als emailliertem Stahlblech, also Stahlemaille, vorgesehen sein. So sind beispielsweise auch Sanitäreinrichtungen mit einem Hauptkörper aus Kunststoff, insbesondere Acryl, Keramik, unbeschichtetem Blech, insbesondere Edelstahlblech, lackiertem oder pulverbeschichtetem Blech und weiterem mehr bekannt, welche grundsätzlich mit dem beschriebenen Volumenmaterial kombiniert werden können.

Die Erfindung bezieht sich jedoch vor dem Hintergrund der spezifischen kombinatorischen Vorteile konkret auf die Ausgestaltung des Hauptkörpers aus emailliertem Stahlblech.

Die Partikel sind so auszuwählen, dass diese in Kombination mit dem ausgehärteten Bindemittel eine langfristige Beständigkeit aufweisen und eine vergleichsweise hohe Tragkraft ermöglichen. Des Weiteren ist zu beachten, dass die Partikel als Schüttgut bereitgestellt werden, welches an zumindest einem Teil der nicht-ebenen Verdecktseite angeordnet wird.

Vor diesem Hintergrund ist es von Vorteil, wenn das aus Partikeln und ausgehärteten Bindemittel gebildete Volumenmaterial eine nicht zu hohe Dichte aufweist, während andererseits - wie zuvor beschrieben - eine ausreichende Tragkraft bereitgestellt werden soll.

Gemäß einer bevorzugten Ausgestaltung der Erfindung ist vorgesehen, dass das Volumenmaterial eine Dichte zwischen 0,15 g/cm³ (Gramm pro Kubikzentimeter) und 0,75 g/cm³ aufweist. Insbesondere kann das Volumenmaterial eine Dichte zwischen 0,20 g/cm³ und 0,65 g/cm³, beispielsweise zwischen, 0,28 g/cm³ und 0,46 g/cm³ aufweisen.

Das Volumenmaterial ist von den Partikeln und dem ausgehärteten Bindemittel, welches die Partikel miteinander verbindet, gebildet.

Grundsätzlich ist es möglich, dass das ausgehärtete Bindemittel die Zwischenräume zwischen den Partikeln vollständig oder im Wesentlichen vollständig ausfüllt. Dagegen kann es aber ausreichend sein, wenn das Bindemittel die aneinander angrenzenden Partikel verbindet, ohne die Zwischenräume vollständig auszufüllen. Gerade im Rahmen einer solchen Ausgestaltung ergibt sich eine besonders kosteneffiziente und vergleichsweise leichte Ausgestaltung des Volumenmaterials. In dem Volumenmaterial verbleiben dann Poren und Freiräume, wobei je nach Ausgestaltung eine offenporige Struktur, eine Struktur mit geschlossenen Poren oder Mischformen möglich sind.

Die zuvor angegebene Dichte bezieht sich dabei auf den von dem Volumenmaterial eingenommenen Raum, unabhängig, ob innerhalb des Volumenmaterials Poren verbleiben. Die Ausbildung von Poren und Zwischenräumen führt dann also in der Regel bei dem Volumenmaterial zu einer Verringerung der bestimmten Dichte.

Gemäß einer bevorzugten Ausgestaltung der Erfindung bilden die Partikel den Hauptbestandteil des Volumenmaterials. So ist gemäß einer bevorzugten Ausgestaltung der Erfindung vorgesehen, dass das Massenverhältnis von Partikeln zu ausgehärtetem Bindemitteln zwischen 95:5 und 50:50, insbesondere zwischen 90:10 und 60:40, liegt.

Gemäß einer bevorzugten Ausgestaltung der Erfindung sind die Partikel anorganisch oder zum Teil anorganisch.

Als anorganische Partikel kommen dabei beispielsweise Blähglas, Schaumglas-Granulat, Blähton, Perlitt, Vermiculite, Bentonit oder auch poröses Vulkangestein wie Bims in Betracht. Von den aufgezählten Materialien oder auch anderen anorganischen Materialien sind vergleichsweise leichte Materialien mit Luft- bzw. Gaseinflüssen im Allgemeinen besonders bevorzugt, um insgesamt vergleichsweise leichte und dennoch tragfähige Sanitäreinrichtungen bilden zu können.

Die genannten anorganischen Materialien erlauben auch auf verschiedene Art und Weise ein besonders effizientes Recycling. So ist es beispielsweise möglich, dass das Volumenmaterial am Ende eines Lebenszyklus der Sanitäreinrichtung bei einem Recycling mechanisch von dem Hauptkörper aus Stahl-Emaille getrennt wird, wobei dann die anorganischen Partikel als Rest- bzw. Wertstoff genutzt werden können.

Beispielsweise können die anorganischen Partikel bei einem entsprechend geeigneten Bindemittel im Baubereich, im Straßenbau, im Garten- und Landschaftsbau oder zu ähnlichen Einsatzzwecken genutzt werden.

Des Weiteren ist es auch möglich, Sanitäreinrichtungen mit dem Hauptkörper aus emailliertem Stahlblech und dem zu einem wesentlichen Anteil aus anorganischen Partikeln gebildeten Volumenmaterial bei einem Metall-Recycling oder bei der Stahlerzeugung als Schrott beizugeben, wobei die anorganischen Partikel dann als Schlacke anfallen.

So ist es bekannt, dass bei der Stahlerzeugung Schlackebildner zur Prozesssteuerung besonders zweckmäßig sein können, wobei anfallende Schlacke auch als Rohstoff für den Baubereich genutzt wird. Grundsätzlich ist es je nach Recyclingprozess auch möglich, die anfallende Schlacke so aufzubereiten, dass daraus wiederum Partikel zur Bildung der erfindungsgemäßen Sanitäreinrichtung erzeugt werden können. Abgesehen von dem notwendigen Energieeinsatz kann dann auch eine Kreislaufwirtschaft der eingesetzten Rohstoffe erreicht werden.

Bei den genannten anorganischen Materialien zeichnet sich Blähglas durch viele spezifische Vorteile aus. Blähglas kann insbesondere vollständig aus Altglasscherben produziert werden. Hierfür werden vorwiegend Glasfraktionen kleiner 8 mm verwendet, die für das Wiederaufschmelzen zur Produktion von Recyclingflaschen und -behältern energetisch ungünstig sein können.

Das für die Herstellung verwendete Altglas wird dann bei bekannten Verfahren zunächst in Mühlen zu Glasmehl zerkleinert, anschließend mit Binde- und Blähmittel vermengt und im weiteren Verlauf granuliert. Bei Temperaturen von beispielsweise 800 °C bis 900 °C im Drehrohrofen expandiert das Granulat und es bilden sich feine Gasporen im Korninneren. Sobald das Blähglas abgekühlt ist, kann es durch einen Siebvorgang in verschiedene Korngrößen aufgeteilt werden.

Abhängig von dem Siebprozess können dann verschiedene Korngrößen bereitgestellt werden. Entsprechende Partikel werden beispielsweise von der PORAVER GmbH aus 96132 Schlüsselfeld, Deutschland gefertigt. Erhältlich sind beispielsweise Korngrößenverteilungen von 0,04 bis 0,125 mm, 0,1 bis 0,3 mm, 0,25 bis 0,5 mm, 0,5 bis 1 mm, 1 bis 2 mm und 2 bis 4 mm. Die PORAVER GmbH vertreibt unter dem Markennamen PORAVER ^{®} Blähglasgranulat, welches innerhalb der einzelnen Partikel eine Vielzahl von Hohlräumen und entsprechend eine multizellulare innere Struktur aufweist. Geeignet ist des Weiteren aber auch Blähglas in Form von Hohlglaskugeln, welche keine multizellulare Struktur, sondern zumindest im Wesentlichen nur einen einzigen Hohlraum aufweisen. Entsprechende Granulate werden in unterschiedlichen Korngrößen bzw. Korngrößenverteilungen von der PORAVER GmbH unter dem Markennamen PORASPHERES ^{®} vertrieben. Bei Blähglas in Form von Hohlglaskugeln weisen die einzelnen Partikel in der Regel eine glattere, im Wesentlichen geschlossene Oberfläche auf, so dass sich eine geringere Aufnahme von Bindemittel bei der Herstellung oder auch Wasser während des Gebrauchs ergibt. Die geringere Aufnahme von Bindemittel kann dazu beitragen, die Menge an Bindemittel zu reduzieren und somit auch Kosten und Gewicht einzusparen. Die Hohlglaskugeln zeichnen sich auch durch eine sehr hohe isostatische Festigkeit aus.

Gemäß einer alternativen Ausgestaltung der Erfindung sind die Partikel mineralisierte Pflanzenpartikel, insbesondere mineralisierte Holzspäne.

Im Herstellungsprozess können dabei definierte Holzhackschnitzel ohne Verwendung von chemischen Zusätzen mineralisiert werden. Die Mineralisierung der Holzhackschnitzel kann durch ein hydraulisches Bindemittel erfolgen. Dies führt dazu, dass neben der Spanoberfläche auch die offenen Porenräume der Holzstruktur mit einer verfestigenden und konservierend wirkenden anorganischen Schicht, beispielsweise einer Calciumsilikathydratschicht, belegt werden. Geeignete Produkte werden beispielsweise von dem Unternehmen Cemwood GmbH, 39126 Magdeburg, Deutschland gefertigt.

Die genannten anorganischen oder teilweise anorganischen Partikel zeichnen sich durch eine gute Wärmedämmung sowie Schall- und Schwingungsdämmung aus. Dies gilt insbesondere für Materialien mit Luft- bzw. Gaseinschlüssen. Des Weiteren resultiert durch die Kombination der Schall- und Schwingungsdämmung auch ein besonders hochwertiger Produkteindruck. Bei orientierenden Versuchen haben Benutzer bei einem Klopfen auf den Hauptkörper einen "massiven Klang" bzw. den Eindruck eines besonders hochwertigen und massiven Produktes beschrieben.

Unter Berücksichtigung der eingesetzten Materialien und der oben beschriebenen Recycling-Möglichkeiten ergibt sich für die anorganischen oder zumindest teilweise anorganischen Partikeln eine besonders gute Umweltverträglichkeit und Umweltbilanz, insbesondere CO₂-Bilanz.

Grundsätzlich kommen im Rahmen der Erfindung auch organische Partikel in Betracht, welche beispielsweise aus expandiertem Polystyrol gebildet sein können. Dabei handelt es sich jedoch um einen organischen Rohstoff, der üblicherweise aus fossilen Vorprodukten gebildet ist. Entsprechendes gilt für einen Großteil üblicher verfügbarer Kunststoff-Materialien, sodass die zuvor im Zusammenhang mit zumindest teilweise anorganischen Partikeln beschriebenen Vorteile nicht erreicht werden. Zumindest ist es jedoch möglich, organische Partikel aus Recyclingmaterial zu gewinnen, sodass im gewissen Maße eine Verbesserung der Öko-Bilanz erreicht wird und entsprechende Recyclingprodukte einer sinnvollen Verwertung zugeführt werden können.

Die Partikel selbst können eine unterschiedliche Form aufweisen, wobei diese auch von dem jeweils ausgewählten Material abhängt. Blähglas weist beispielsweise häufig eine abgerundete, im weitesten Sinne kugelartige Form der Partikel auf. Schaumglas-Granulat, welches auch als Schaumglas-Schotter bezeichnet wird, kann dagegen auch eine gebrochene, vergleichsweise scharfkantige Struktur aufweisen. Mineralisierte Pflanzenpartikel und insbesondere mineralisierte Holzspäne sind dagegen häufig eher platten- oder stäbchenförmig.

Unabhängig von der konkreten Form können die Partikel im Rahmen der Erfindung beispielsweise ein mittleres Volumen zwischen 0,0005 mm³ und 34 mm³, insbesondere zwischen 0,004 m³ und 14 mm³ aufweisen. Die Bestimmung des mittleren Volumens kann dabei durch eine arithmetische Mittelwertbildung erfolgen.

Dabei ist auch zu berücksichtigen, dass die Partikel in der Regel mit einer gewissen, üblichen Verteilung, beispielsweise einer Normalverteilung oder einer ähnlichen Verteilung bereitgestellt werden, wobei dann eine entsprechende Verteilungskurve um einen Maximalwert in beide Richtungen abfällt.

In diesem Zusammenhang ist es im Rahmen der Erfindung auch möglich, dass die Partikel bezogen auf das Volumen mit einer ersten Verteilung und einer zweiten Verteilung derart bereitgestellt werden, dass sich in einer Gesamtverteilung zumindest zwei voneinander beabstandete Maxima ergeben.

Davon ausgehend sind verschiedene Konzepte denkbar. So ist es möglich, dass die Partikel der ersten Verteilung und der zweiten Verteilung zumindest bereichsweise gleichmäßig gemischt sind. Dann kann beispielsweise vorgesehen sein, dass in einer statistisch gleichmäßigen Anordnung Partikel der ersten Verteilung und der zweiten Verteilung vorhanden sind, wobei beispielsweise kleinere Partikel in Zwischenräumen von großen Partikeln angeordnet sein können. Große Partikel können dann dazu vorgesehen sein, um das Volumen effizient zu füllen, wobei dann durch die dazwischen angeordneten kleineren Partikel zusätzliche Verbindungsstellen gebildet sein können.

Zusätzlich oder alternativ ist es jedoch auch möglich, dass die zumindest zwei Verteilungen zumindest bereichsweise nicht gleichmäßig gemischt sind. Beispielsweise ist es denkbar, Bereiche des Volumenmaterials mit der einen Verteilung und andere Bereiche mit der zweiten Verteilung zu bilden.

Wenn beispielsweise an bestimmten Stellen des Volumenmaterials besondere Belastungen erwartet werden, so kann dann gegebenenfalls auch dafür eine angepasste Verteilung bzw. Kombination von Verteilungen vorgesehen werden.

Des Weiteren ist es beispielsweise auch möglich, verschiedene Verteilungen schichtweise übereinander anzuordnen. Beispielsweise kann auch eine Deckschicht des Volumenmaterials mit vergleichsweise kleinen Partikeln gebildet werden, um eine möglichst ebene, glatte Oberfläche zu erzeugen. Grundsätzlich wird dabei auch zu erwarten sein, dass die Verteilungen an Übergängen in einem gewissen Maße miteinander vermischt sind.

Zusätzlich oder alternativ können auch verschiedene Arten von Partikel kombiniert werden, auch wenn angenommen wird, dass eine solche Variation in vielen Anwendungsfällen nicht notwendig ist.

Erfindungsgemäß wird das Volumenmaterial mit dem aushärtenden Bindemittel gebildet. Verschiedene Arten von Bindemitteln und somit auch verschiedene Arten der Aushärtung kommen dabei in Betracht.

Grundsätzlich kommen organische Bindemittel in Form von Kunstharz in Betracht, wobei hierzu eine große Auswahl an verschiedenen Systemen verfügbar ist. Bekannt sind beispielsweise verschiedene Arten von Polyesterharz und Epoxidharz. Des Weiteren sind auch biobasierte Epoxidharze bekannt, sodass dann zumindest in einem gewissen Maße gegenüber klassischen organischen Bindemitteln eine gewisse Verbesserung der ökologischen Verträglichkeit erreicht werden kann.

Gemäß einer bevorzugten Ausgestaltung der Erfindung ist jedoch vorgesehen, dass das Bindemittel anorganisch ist. Das Bindemittel kann dabei ausgewählt aus der Gruppe zementäre Bindemittel oder Wasserglas sein.

Besonders bevorzugt ist dabei Wasserglas, welches auch als ein Geopolymer bezeichnet wird. Als Wasserglas werden aus einer Schmelze erstarrte glasartige, also amorphe, wasserlösliche Natrium-, Kalium- und Lithiumsilikate oder ihre wässrigen Lösungen bezeichnet. Je nachdem, ob überwiegend Natrium-, Kalium- oder Lithiumsilikate enthalten sind, spricht man von Natronwasserglas, Kaliwasserglas oder Lithiumwasserglas. Besonders bevorzugt ist im Rahmen der Erfindung Kaliwasserglas.

Bereits durch den Einsatz von anorganischen Partikeln oder teilweise anorganischen Partikeln ergeben sich im Rahmen der Erfindung gute bauphysikalische Eigenschaften wie beispielsweise auch eine geringe Brandneigung. Diese Effekte werden selbstverständlich weiter verbessert, wenn auch ein anorganisches Bindemittel eingesetzt wird.

Das gesamte Volumenmaterial ist dann vollständig oder zu einem großen Teil aus anorganischem Material gebildet, was auch hinsichtlich des zuvor bereits beschriebenen Recyclings besonders vorteilhaft ist, wenn das Volumenmaterial beispielsweise von dem Hauptkörper abgetrennt und als Wertstoff genutzt wird oder die ganze Sanitäreinrichtung bei der Stahlherstellung oder einem separaten Metall-Recycling aufgeschmolzen wird.

Das Volumenmaterial kann einen einteiligen Formkörper bilden. Beispielsweise kann die Unterseite einer Duschwanne mit dem Volumenmaterial versehen sein.

Wenn die Duschwanne in bekannter Weise mit einer Unterkantung versehen ist, so kann dann der über die Höhe der Unterkantung gebildete Innenraum zumindest teilweise mit dem Volumenmaterial ausgefüllt sein. Dabei können Bereiche beispielsweise für die Anordnung eines Abflusses oder dergleichen ausgespart werden wozu auch auf die entsprechenden Ausführungen der DE 10 2022 128 990 B3 Bezug genommen wird. Wenn der Hauptkörper beispielsweise in Form einer Duschwanne mit einer Unterkantung versehen ist, kann das Volumenmaterial aber auch entlang der Höhe in Bezug auf den Montagezustand über die Unterkantung vorspringen oder auch gegenüber der Unterkantung zurückspringen. Entsprechende Maßnahmen sind dabei auch aus der DE 10 2022 128 990 B3 im Zusammenhang mit den Figuren 3A bis 3D erläutert, worauf ausdrücklich Bezug genommen wird.

Neben der Ausbildung eines einteiligen Formkörpers mit dem Volumenmaterial ist es grundsätzlich auch denkbar, dass das Volumenmaterial an der Verdecktseite mehrere voneinander getrennte Stützstrukturen bildet. Dabei ist jedoch zu beachten, dass dann an den Zwischenräumen die im Rahmen der Erfindung beschriebenen Eigenschaften eines vorteilhaften Verbundmaterials nicht erreicht werden. Entsprechende Ausgestaltungen sind also insbesondere dann denkbar, wenn die von dem Volumenmaterial freigelassenen Bereiche an der Verdecktseite entweder eine ausreichende Tragkraft des Hauptkörpers aufweisen oder während der Benutzung nicht übermäßig belastet sind.

Vorzugsweise ist vorgesehen, dass das Volumenmaterial stoffschlüssig und/oder formschlüssig mit dem Hauptkörper verbunden ist. In bekannter Weise kann sich eine formschlüssige Verbindung dann ergeben, wenn die Sanitäreinrichtung eine Unterkantung oder eine in sonstiger Weise gebildete Hinterschneidung aufweist, welche von dem Volumenmaterial ausgefüllt und damit hintergriffen ist. Unter einer formschlüssigen Verbindung wird dabei eine Verbindung verstanden, die nicht durch eine einfache Linearbewegung lösbar ist. Beispielsweise wird ein einfaches Aufliegen in diesem Sinne selbstverständlich nicht als Formschluss bezeichnet.

Vorzugsweise erlaubt das aushärtende Bindemittel zusätzlich oder alternativ einen Stoffschluss mit dem Hauptkörper aus emailliertem Stahlblech. Die Emaillierung des Stahlblechs ist dabei in der Regel an der Nutzseite und insbesondere der gesamten Nutzseite vorgesehen. Zweckmäßigerweise ist aber auch die Verdecktseite zumindest teilweise und vorzugsweise vollständig oder im Wesentlichen vollständig mit einer Emaillierung versehen.

Bei der Fertigung des Hauptkörpers kann beispielsweise vorgesehen sein, dass die gesamte Oberfläche oder nahezu die gesamte Oberfläche (beispielsweise bis auf einzelne Auflage- oder Haltepunkte) mit einer Emaillierung, beispielsweise einer Grundemaillierung, versehen ist. Je nach Ausgestaltung kann dann auch eine weitere Emaillierung, beispielsweise eine Deckemaillierung, zumindest an der Nutzseite vorgesehen werden, um eine gewünschte Oberflächenbeschaffenheit des emaillierten Stahlblechs an der Nutzseite zu erreichen. Entsprechende Maßnahmen sind dabei bei der Fertigung üblicher Sanitäreinrichtungen bekannt.

Bei der Verwendung von Wasserglas als aushärtendem Bindemittel ergibt sich der besondere Vorteil, dass Wasserglas bei dem Aushärten auch eine sehr feste Verbindung mit der anorganischen, glasartigen Emaillierung eingeht, sodass dann im besonderen Maße der bereits zuvor beschriebene Charakter eines Verbund-Materials erreicht werden kann.

Im Rahmen der Erfindung kann vorgesehen sein, dass das Volumenmaterial einen Raum mit einem Volumen zwischen 2 l und 60 l, insbesondere zwischen 5 l und 30 l einnimmt. Die Menge des Volumenmaterials hängt dabei auch von der konkreten Ausgestaltung des Hauptkörpers ab und ist nicht auf den angegebenen Bereich beschränkt.

Beispielsweise bei einem Hauptkörper in Form einer Badewanne und insbesondere einer Badewanne mit Schürze können ohne weiteres auch größere Mengen des Volumenmaterials vorgesehen sein. Der Begriff einer Badewanne mit Schürze oder eine Schürzenbadewanne bezieht sich auf Ausgestaltungen, bei denen der von einem Benutzer beim Baden belegte Innenraum von einer Innenwand gebildet ist, während eine davon separate Außenwand die sichtbare Außenseite bildet. Zwischen der Innenwand und der Außenwand verbleibt ein Abstand, wobei durch die Bereitstellung der separaten Wände auch eine unterschiedliche Formgebung möglich ist. Des Weiteren können zwischen der Innenwand und der Außenwand, die beispielsweise über einen oberen Wannenrand miteinander verbunden sind, auch Zu- und Ablaufleitungen, Armaturen oder dergleichen angeordnet sein. Der Raum zwischen Innenwand und Außenwand bildet dann im Sinne der vorliegenden Erfindung die Verdecktseite, wobei dort zumindest abschnittsweise das Volumenmaterial angeordnet sein kann.

Wie auch nachfolgend weiter erläutert, können die Partikel als Schüttgut bei der Herstellung sehr leicht aufgebracht und verteilt werden. So ist es beispielsweise auch möglich, dass an einer dem Hauptkörper gegenüberliegenden Seite des Volumenmaterials eine Standfläche insbesondere eine ebene Standfläche gebildet ist.

Auch wenn in vielen Anwendungsfällen eine ebene Fläche besonders zweckmäßig ist, können durch die Formbarkeit des Volumenmaterials auch andere Strukturen wie Vorsprünge, Rillen oder der gleichen erzeugt werden.

Wie bereits eingangs erläutert, kann im Rahmen der Erfindung durch das Volumenmaterial aus Partikeln und aushärtendem Bindemittel eine besonders hohe Festigkeit erreicht werden. Es ist dann auch möglich, im Vergleich zu bekannten Hauptkörpern aus emaillierten Stahlblech eine geringere Blechdicke vorzusehen.

Grundsätzlich ist bereits bekannt, dass unterschiedliche Hauptkörper beispielsweise in Form eines Waschbeckens oder in Form einer Duschwanne in Abhängigkeit von den jeweils zu erwartenden Belastungen mit einer unterschiedlichen Blechdicke gefertigt werden können. Im Rahmen der Erfindung wird jedoch durch die erhöhte Festigkeit des Volumenmaterials insgesamt eine Verringerung der Blechdicke für den jeweiligen Anwendungsfall möglich.

So ist gemäß einer bevorzugten Ausgestaltung der Erfindung vorgesehen, dass das Stahlblech eine Blechdicke zwischen 0,1 mm und 2,5 mm, insbesondere zwischen 0,2 mm und 1,4 mm aufweist. Beispielsweise können im Rahmen der Erfindung auch hochbelastete Hauptkörper, beispielsweise in der Form einer Duschwanne, auch mit einer Blechdicke von beispielsweise 0,2 mm bis 1,4 mm gebildet werden, wobei dann eine wesentliche Tragfunktion auch dem erfindungsgemäßen Volumenmaterial zukommt.

Wenn ausgehend von einem bekannten Hauptkörper die Blechdicke im Rahmen der Erfindung beispielsweise halbiert wird, ergibt sich auch ein entsprechend verringerter Materialbedarf für das Stahlblech, wodurch hinsichtlich der gesamten Sanitäreinrichtung geringere Kosten, ein vergleichsweise geringes Gewicht und gute ökologische Eigenschaften im Sinne einer Bilanzierung, beispielsweise einer CO₂-Bilanz, erreicht werden können.

Selbstverständlich kann das Stahlblech bei der Herstellung bei einer geringeren Blechdicke auch leichter ausgeformt werden. Es ergibt sich dann ein verringerter Fertigungsaufwand, wobei auch leichter Konturen ausgeformt werden können. Insbesondere können dann auch feinere Konturen wie beispielsweise Funktionskonturen, Ornamente, dreidimensionale Ziermuster oder dergleichen erzeugt werden.

So ist gemäß einer Variante der Erfindung vorgesehen, dass der Hauptkörper eine dekorative oder funktionelle Prägestruktur aufweist. Beispielsweise können in einer Duschwanne Rippen oder dergleichen vorgesehen sein, wobei entsprechende dekorative oder funktionelle Prägestrukturen auch bei einer aus dem Stand der Technik üblichen Blechdicke möglich sind.

Bei einer geringeren Blechdicke im Rahmen des zuvor beschriebenen Verbund-Konzeptes sind entsprechende Konturen jedoch leichter auszubilden, wobei auch schärfere Strukturen erzeugt werden können. So ist es beispielsweise auch möglich, innerhalb der Nutzfläche einer Duschwanne oder dergleichen dekorative Strukturen zu bilden, die Abwinklungen von beispielsweise mehr als 45° aufweisen.

Dabei sind im Rahmen der Erfindung mehrere Aspekte zu beachten. Einerseits kann bei einer verringerten Blechdicke eine deutlich einfachere Umformung erfolgen. Des Weiteren können dann entsprechende Stellen von dem Volumenmaterial bei Benutzung abgestützt sein, sodass auch bei einer vergleichsweise scharfen Umformung keine Schwachstellen der gesamten Sanitäreinrichtung resultieren. Darüber hinaus ergibt sich auch der Vorteil, dass die Partikel als Schüttgut bereitgestellt werden, wobei dann bei der Herstellung das Schüttgut sich auch an komplexe Formen unmittelbar anpassen kann, bevor dann das Bindemittel auswertet.

Die Erzeugung von Strukturen kann beispielsweise gemäß der DE 10 2022 114 727 A1 erfolgen, wobei auch gerade dann die Ausformung bei einer verringerten Blechdicke noch einfacher und noch flexibler möglich ist.

Wie auch bereits zuvor dargelegt, kann der Hauptkörper eine Duschfläche oder eine Sanitärwanne bilden. Die Sanitärwanne kann beispielsweise als Waschbecken, Badewanne oder Duschwanne ausgeführt sein. Darüber hinaus können aber auch andere Sanitäreinrichtungen wie beispielsweise eine Heizung für den Sanitärbereich, eine Trennwand, Wandelemente, Verkleidungen wie Schürzen oder dergleichen gebildet werden.

Bei einer Vielzahl von Anwendungen ist ein einteiliger Hauptkörper vorgesehen, wobei aber auch eine mehrteilige Ausgestaltung nicht ausgeschlossen ist. Der Hauptkörper kann beispielsweise mehrteilig als Badewanne mit Schürze ausgeführt sein, wobei dann der Hauptkörper von einem Wannenteil und einem Schürzenteil gebildet ist. Entsprechende Teile können dann gegebenenfalls auch direkt über das Volumenmaterial verbunden sein. Ähnliche Überlegungen gelten beispielsweise auch bei einer aus mit Halbteilen gebildeten Trennwand oder einem mit zumindest zwei Teilen gebildeten Heizkörper.

Selbstverständlich können Badewanne oder Waschbecken mit Schürze aber auch mit einem zusammenhangenden Hauptkörper bereitgestellt werden, wobei entsprechende Wandabschnitt beispielsweise miteinander verschweißt oder gegebenenfalls auch aus einem Blechabschnitt gebildet sein können.

Insbesondere bei mehreren Teilen oder miteinander verschweißten Abschnitten können im Rahmen der Erfindung auch unterschiedliche Blechdicken vorgesehen sein. Wenn beispielsweise eine Schürze einer Badewanne nicht tragend ist, so kann dafür gegebenenfalls auch eine geringere Blechdicke vorgesehen sein.

Gemäß einer weiteren Ausgestaltung der Erfindung ist vorgesehen, dass zumindest ein Funktionselement in das Volumenmaterial eingebettet ist. Das Funktionselement kann dabei entweder vollständig in dem Volumenmaterial angeordnet sein oder sich aus dem Volumenmaterial heraus erstrecken.

Als eingebettete Funktionselemente kommen beispielsweise Sensoren, Heizungs- und/oder Wärmetauscherrohre, elektrische Heizeinlagen oder dergleichen in Betracht.

Als Funktionselemente können ihm Rahmen der Erfindung auch Verstärkungseinlagen vorgesehen sein. Denkbar sind beispielsweise Verstärkungsmatten oder in Verstärkungsstränge. Im Rahmen der Erfindung ist eine solche Weiterbildung grundsätzlich möglich, aber aufgrund der alleine durch geeignete Partikel und das ausgehärtete Bindemittel zu erreichenden Festigkeit bei vielen Ausgestaltungen nicht bevorzugt. Grundsätzlich geeignet sind beispielsweise Matten und Stränge aus Glasfaser, welche gerade mit Wasserglas als bevorzugtem Bindemittel eine sehr feste und dauerhafte Verbindung eingehen können.

Funktionselemente, die sich aus dem Volumenmaterial heraus erstrecken oder zumindest an dem Volumenmaterial zugänglich sind, können beispielsweise Wannenanker, Füße, Schraubhülsen, Erdungslaschen, Befestigungsschienen, Installationsprofile oder dergleichen sein.

Bei einem geeigneten Material ist es auch möglich, dass Funktionselemente nicht in das Volumenmaterial eingebettet sind, sondern lediglich daran anschließen.

Beispielsweise kann ein Wannenanker aus Stahl-Emaille oder auch ein anderer Gegenstand bei der Herstellung vor dem Aushärten des Bindemittels aufgelegt werden und wird dann auch durch das Aushärten des Bindemittels stoffschlüssig verbunden.

Gegenstand der Erfindung ist auch ein Verfahren zur Herstellung der zuvor beschriebenen Sanitäreinrichtung. Dabei ist erfindungsgemäß vorgesehen, dass ein Hauptkörper aus einem emaillierten Stahlblech bereitgestellt wird, der eine Nutzseite und eine vorzugsweise nicht-ebene Verdecktseite aufweist, wobei Partikel als Schüttgut und ein unausgehärtetes Bindemittel aufgebracht werden und wobei nachfolgend durch das Aushärten des Bindemittels ein Volumenmaterial gebildet wird, welches zumindest abschnittsweise eine zu der Verdecktseite komplementäre Topographie aufweist.

Bevorzugt ist vorgesehen, dass sich das Volumenmaterial durch das Aushärten des Bindemittels stoffschlüssig mit der Verdecktseite verbindet. Es entsteht dann unmittelbar ein besonders fester Verbund alleine durch das Aushärten des Bindemittels. Eine besonders feste, innige Verbindung kann erreicht werden, wenn - wie bereits zuvor beschrieben - Wasserglas als Bindemittel eingesetzt wird.

Dabei kann insbesondere vorgesehen sein, dass das aufgebrachte Schüttgut vor dem Aushärten des Bindemittels geformt wird. Das Ausformen kann beispielsweise durch ein Glattziehen oder eine Art modellieren erfolgen. Es können auch Leisten, Füllstücke oder andere Elemente eingesetzt werden, um das Volumenmaterial in einer gewünschten Weise ausformen zu können.

Beispielsweise ist es möglich, dass vor dem Aushärten des Bindemittels und vorzugsweise auch vor dem Aufbringen der Partikel als Schüttgut ein Füllkörper an der Sanitärrichtung angeordnet wird, wobei der Füllkörper unter Ausbildung eines Freiraums in dem Volumenmaterial wieder entfernt wird. Der Füllkörper wird zweckmäßigerweise dann entnommen, wenn das Bindemittel zumindest teilweise ausgehärtet ist.

Wie bereits eingangs erläutert, kann das Volumenmaterial im Rahmen der Erfindung wesentlich der Stabilität der gesamten Sanitäreinrichtung beitragen. Dabei ist es bekannt, dass beispielsweise durch ein Tiefziehen umgeformtes Blech auch gewisse Verzüge haben kann, die teilweise nicht im Einzelnen vorausgesagt werden können. Dies gilt insbesondere, wenn ausgehend von bekannten Hauptkörpern die Blechdicke verringert wird. Es ist dann auch möglich, dass der Hauptkörper für sich alleine betrachtet nur eine geringe Eigenstabilität aufweist.

Vor diesem Hintergrund ist gemäß einer bevorzugten Ausgestaltung der Erfindung vorgesehen, dass der Hauptkörper während des zumindest teilweisen Aushärtens des Bindemittels durch aktive Krafteinwirkung gehalten bzw. fixiert wird. Entsprechend liegt dann der Hauptkörper bei dem Aushärten nicht nur auf einem Untergrund auf. Vielmehr sind dann darüber hinausgehende oder alternative Maßnahmen zur Fixierung vorgesehen. Beispielsweise kann der Hauptkörper magnetisch oder in anderer Weise, beispielsweise durch Unterdruck, in einer vorgegebenen Form gehalten werden, sodass dann etwaige Verzüge ausgeglichen sind.

Möglich ist es auch, den Hauptkörper durch randseitige Leisten oder andere Elemente auf eine Unterlage zu drücken und somit zu fixieren. Auch dann können etwaige Verzüge ausgeglichen werden, bis das Bindemittel zumindest teilweise ausgehärtet ist. Der Hauptkörper wird dann so lange in einer gewünschten Form gehalten, bis die Sanitäreinrichtung im Sinne eines Verbundmaterials die gewünschte Festigkeit zumindest zu einem Teil bereits aufweist.

Die Erfindung wird nachfolgend anhand von Figuren erläutert. Es zeigen:
- Fig. 1: einen Hauptkörper zur Bildung einer Sanitäreinrichtung,
- Fig. 2: die Sanitäreinrichtung mit dem Hauptkörper und einem daran angeordneten Volumenmaterial,
- Fig. 3: eine Detailansicht der Sanitäreinrichtung in einer Schnittdarstellung,
- Fig. 4: eine vergrößerte Ansicht des Volumenmaterials,
- Fig. 5: eine exemplarische Darstellung der Sanitäreinrichtung bei einer Montage,
- Fig. 6: eine Variante der Sanitäreinrichtung in einer Ansicht entsprechend der Fig. 2.

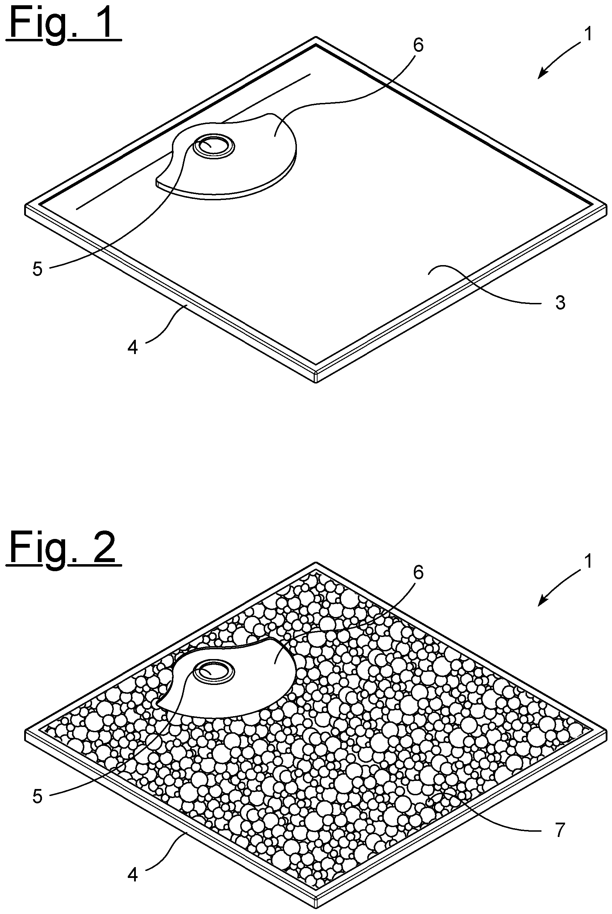

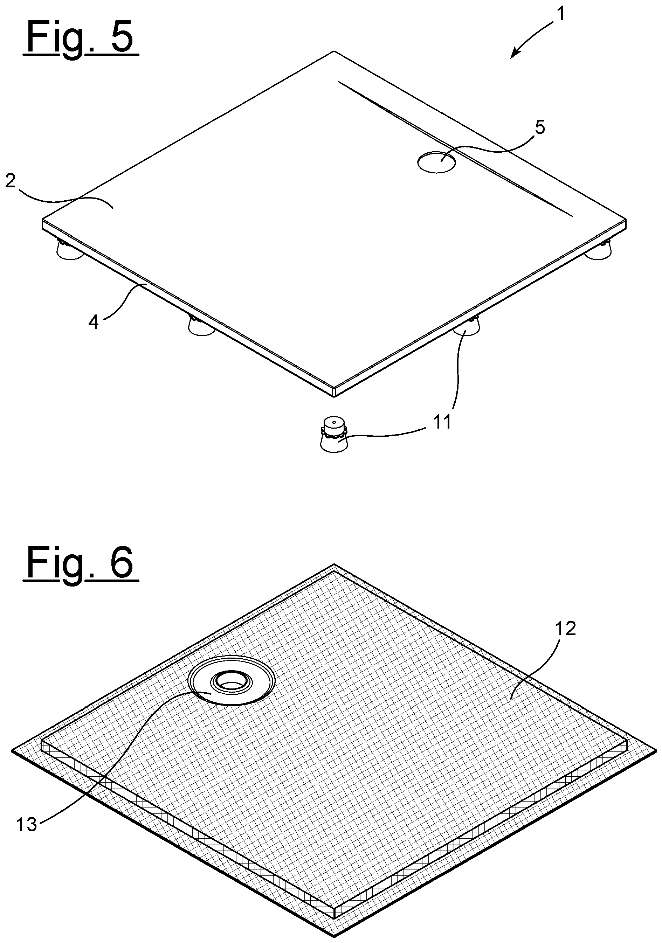

Die Figur 1 zeigt einen Hauptkörper 1 aus emailliertem Stahlblech in Form einer Duschwanne. Der Hauptkörper 1 weist eine Nutzseite 2 auf, welche im montierten Zustand (siehe auch nachfolgend zu Figur 5) eine Standfläche der Duschwanne bildet.

In der Figur 1 ist Hauptkörper 1 jedoch so angeordnet, dass die Nutzseite 2 unten liegt, wobei entsprechend eine im montierten Zustand nicht sichtbare, nicht-ebene Verdecktseite 3 oben liegt.

Der Hauptkörper weist einen umlaufenden c-förmigen Wannenrand 4 mit einer Unterkantung auf. Bezogen auf den umgedrehten Hauptkörper 1 bildet der umlaufende Wannenrand 4 an der Verdeckseite 3 einen Freiraum.

Der Hauptkörper 1 weist eine Öffnung 5 auf, die bei der montierten Sanitäreinrichtung als Ablauföffnung vorgesehen ist. An der Öffnung 5 wird dann in bekannter Weise eine Ablaufgarnitur angeordnet. Damit für die Ablaufgarnitur ein Freiraum verbleibt, ist gemäß der Figur 1 um die Öffnung 5 ein Füllkörper 6 angeordnet, dessen Funktion sich aus den nachfolgenden Erläuterungen ergibt.

Gemäß der Figur 2 ist an der Verdecktseite 3 ein Volumenmaterial 7 angeordnet. Wie nachfolgend weiter erläutert, ist das Volumenmaterial 7 von einem aus Partikeln 8 gebildeten Schüttgut und einem die Partikel 8 verbindenden ausgehärteten Bindemittel 9 gebildet.

Bei der Herstellung des Volumenmaterials können die Partikel 8 dann als Schütte eingefüllt und noch geformt werden. Insbesondere kann die Schütte aus Partikeln 8 leicht um den Füllkörper 6 herum angeordnet werden, wobei auch noch eine weitere Formgebung und Modellierung grundsätzlich denkbar sind.

Bei der Herstellung wird des Weiteren das zunächst noch nicht ausgehärtete Bindemittel 9 zugegeben. Dabei ist es möglich, dass zunächst die Schütte aus Partikeln 8 in der gewünschten Weise angeordnet wird, wobei dann nachfolgend das Bindemittel 9 aufgebracht, beispielsweise aufgesprüht, wird, welches dann Aushärten. Alternativ ist aber auch denkbar, dass die Partikel 8 bei dem Anordnen an der Verdecktseite 3 bereits mit dem Bindemittel 9 versehen sind, welches aber noch nicht ausgehärtet ist. Beispielsweise kann ein flüssiges Bindemittel 9 vorgesehen sein, welches dann während der Aushärtedauer noch eine gewisse Verteilung und Formung der Partikel 8 ermöglicht.

Grundsätzlich ist es auch denkbar, ein festes oder flüssiges Bindemittel einzusetzen, welches durch externe Einflüsse wie Wärmezufuhr und/oder Bestrahlung aktiviert wird.

Nach einem zumindest teilweisen Aushärten des Bindemittels (9) kann das Füllstück 6 dann entfernt werden, wodurch an der Verdecktseite 3 ein Freiraum gebildet wird.

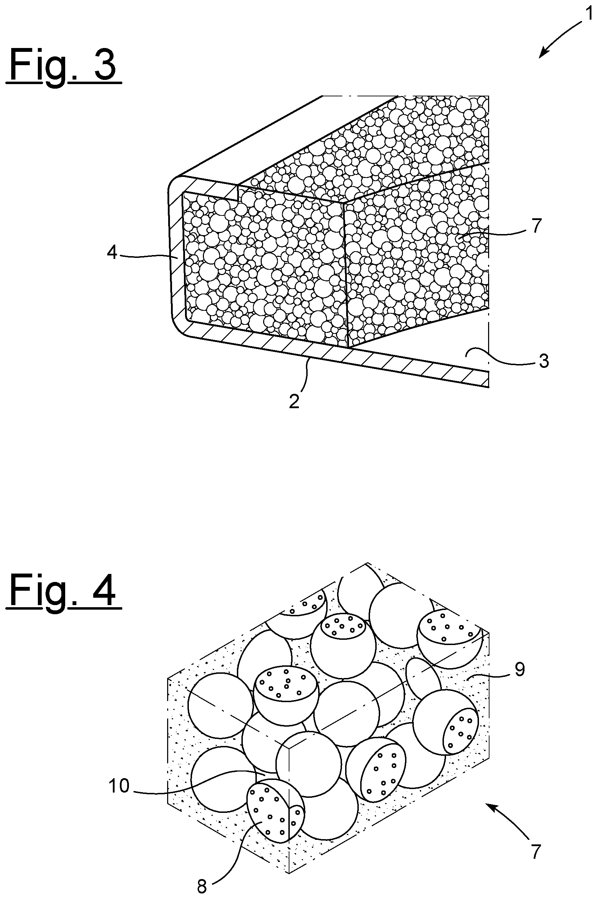

Gemäß der Detailansicht der Figur 3 schließt das Volumenmaterial 7 flächenbündig an die an dem Wannenrand 4 gebildete Unterkantung an. Beispielsweise kann dazu vorgesehen sein, dass die als Schüttgut aufgebrachten Partikel 8 bei der Herstellung über den C-förmigen Wannenrand 4 mit einer Leiste oder dergleichen abgezogen werden.

Grundsätzlich ist es aber auch möglich, dass das Volumenmaterial 7 sich über eine größere oder geringere Höhe erstreckt, wozu entsprechende Maßnahmen beispielsweise aus der DE 10 2022 128 990 B3 bekannt sind, auf dessen Inhalt ausdrücklich Bezug genommen wird. Auch die Integration von verschiedenen Funktionselementen ist diesem Stand der Technik erläutert, wobei die entsprechenden Maßnahmen auch im Rahmen der vorliegenden Erfindung vorgesehen sein können.

Die Figur 4 zeigt eine Detailansicht des aus den Partikeln 8 und dem ausgehärteten Bindemittel 9 gebildeten Volumenmaterials 7. Gemäß einer besonders bevorzugten Ausgestaltung der Erfindung ist vorgesehen, dass sowohl das Bindemittel 9 als auch die Partikel 8 zumindest teilweise anorganisch sind. Die Partikel 8 können beispielsweise von mineralisierten Pflanzenpartikeln, insbesondere mineralisierten Holzspänen, Blähglas, Schaumglas-Granulat, Blähton, Perlit, Vermiculite oder Bentonit gebildet sein.

Die Figur 4 zeigt hierzu konkret eine Ausgestaltung, bei der die Partikel 8 Luft bzw. Gaseinflüsse aufweisen, wobei die exemplarisch aus Blähglas gebildeten Partikel 8 eine runde Form aufweisen.

Als anorganisches Bindemittel 9 ist gerade in Kombination mit Blähglas oder auch Schaumglas-Granulat Wasserglas im besonderen Maße geeignet, welches dann die Partikel 8 stoffschlüssig verbindet. Insbesondere können in dem Volumenmaterial 7 auch noch Poren 10 als Freiräume vorhanden sein, sodass das Volumenmaterial 7 insbesondere äußerst belastbar aber dennoch vergleichsweise leicht ist.

Das Volumenmaterial 7 ist vorzugsweise auch nachträglich noch durch Bohren oder Fräsen bearbeitbar, beispielsweise um Füße 11 oder dergleichen montieren zu können. Für die Kombination von Blähglas als Partikel 8 und Wasserglas als Bindemittel 9 sind diese Vorgaben ohne weiteres erfüllt.

Durch die hohe Stabilität des Volumenmaterials 7 wird zusammen mit dem Hauptkörper 1 eine Art Verbundelement gebildet, dessen Festigkeit wesentlich auch von dem Volumenmaterial 7 bereitgestellt wird.

Der Hauptkörper 1 kann dabei im Vergleich zu Ausgestaltungen gemäß dem Stand der Technik mit einer geringeren Dicke gefertigt werden. Beispielsweise kann der Hauptkörper 1 in Form einer Duschwanne auch mit einer Blechdicke zwischen 0,2 mm und 1,4 mm gebildet werden.

Hinsichtlich der Figuren 1 und 2 kann dann insbesondere auch vorgesehen sein, dass der Hauptkörper 1 bei der Fertigung aktiv in einer vorgegebenen Form gehalten wird, wozu beispielsweise Magnete, Niederhalter oder dergleichen genutzt werden können.

Die Figur 5 zeigt eine mögliche Montage der Sanitäreinrichtung mit separaten Füßen 11. Wie zuvor erläutert können die Füße angeschraubt werden. Aufnahmen für die Füße 11 können dabei an dem Volumenmaterial 7 angeschraubt werden oder auch in Form von Hülsen oder dergleichen als Funktionselemente direkt in dem Volumenmaterial 7 eingebettet sein. Dabei ergibt sich der Vorteil, dass bei der zuvor beschriebenen Herstellung das Volumenmaterial 7 sehr leicht mit einer ebenen und gleichzeitig tragfähigen Fläche gebildet werden kann. Grundsätzlich kann es aber auch ausreichend sein, die Füße 11 in ihrer Höhe auszurichten und die Sanitäreinrichtung lediglich aufzulegen.

Die Figur 6 zeigt eine Variante der vorliegenden Erfindung. Gezeigt ist die Sanitäreinrichtung in einer Ansicht gemäß der Figur 2, wobei jedoch der Füllkörper 6 bereits entfernt ist. Der Hauptkörper 1 mit dem daran angeordneten Volumenmaterial 7 ist von einem Dichtmaterial 12 abgedeckt, welches somit einen unmittelbaren Bestandteil der Sanitäreinrichtung bildet. Das Dichtmaterial 12 kann dabei auch direkt mit den Bindemitteln 9 oder gegebenenfalls auch mit einem separaten Klebstoff fixiert sein. Im Bereich der Öffnung 5 ist des Weiteren auch bereits eine Ablaufdichtung 13 direkt an das Dichtmaterial 12 angeschlossen.

## Patentansprüche

1. Sanitäreinrichtung mit einem eine Nutzseite (2) aufweisenden Hauptkörper (1) aus emailliertem Stahlblech, wobei an einer nicht-ebenen Verdecktseite (3) des Hauptkörpers (1) ein Volumenmaterial (7) angeordnet ist, welches zumindest abschnittsweise eine zu der nicht-ebenen Verdecktseite (3) komplementäre Topografie aufweist, **dadurch gekennzeichnet, dass** das Volumenmaterial (7) von einem aus Partikeln (8) gebildeten Schüttgut und einem die Partikel (8) verbindenden ausgehärteten Bindemittel (9) gebildet ist.

2. Sanitäreinrichtung nach Anspruch 1, **dadurch gekennzeichnet, dass** das Volumenmaterial (7) eine Dichte zwischen 0,15 g/cm³ und 0,75 g/cm³ aufweist

3. Sanitäreinrichtung nach Anspruch 1 oder 2, **dadurch gekennzeichnet, dass** das Massenverhältnis von Partikeln (8) zu ausgehärtetem Bindemittel (9) zwischen 95:5 und 50:50, insbesondere zwischen 90:10 und 60:40, liegt.

4. Sanitäreinrichtung nach einem der Ansprüche 1 bis 3, **dadurch gekennzeichnet, dass** die Partikel (8) anorganisch sind und insbesondere ausgewählt sind aus der Gruppe Blähglas, Schaumglas-Granulat (Schaumglasschotter), Blähton, Perlit, Vermiculite, Bentonit.

5. Sanitäreinrichtung nach einem der Ansprüche 1 bis 3, **dadurch gekennzeichnet, dass** das die Partikel (8) mineralisierten Pflanzenpartikeln, insbesondere mineralisierte Holzspäne, sind.

6. Sanitäreinrichtung nach einem der Ansprüche 1 bis 5, **dadurch gekennzeichnet, dass** die Partikel (8) ein mittleres Volumen zwischen 0,0005 mm³ und 34 mm³, insbesondere zwischen 0,004 mm³ und 14 mm³ aufweisen.

7. Sanitäreinrichtung nach einem der Ansrüche 1 bis 6, **dadurch gekennzeichnet, dass** die Partikel (8) bezogen auf das Volumen mit einer ersten Verteilung und einer zweiten Veteilung derart bereitgestellt werden, dass sich in einer Gesamtverteilung zumindest zwei voneiander beabstandete Maxima ergeben.

8. Sanitäreinrichtung nach einem der Ansprüche 1 bis 7, **dadurch gekennzeichnet, dass** das Bindemittel (9) anorganisch ist und insbesondere ausgewählt ist aus der Gruppe zementäre Bindemittel, Wasserglas.

9. Sanitäreinrichtung nach einem der Ansprüche 1 bis 8, **dadurch gekennzeichnet, dass** der Hauptkörper (1) eine dekorative Prägestruktur aufweist.

10. Sanitäreinrichtung nach einem der Ansprüche 1 bis 9, **dadurch gekennzeichnet, dass** das Volumenmaterial (7) einen einteiligen Formkörper bildet.

11. Sanitäreinrichtung nach einem der Ansprüche 1 bis 8, **dadurch gekennzeichnet, dass** das Volumenmaterial (7) stoffschlüssig und/oder formschlüssig mit dem Hauptkörper (1) verbunden ist.

12. Sanitäreinrichtung nach einem der Ansprüche 1 bis 11, **dadurch gekennzeichnet, dass** das Volumenmaterial (7) einen Raum mit einem Volumen zwischen 2 l und 60 l, insbesondere zwischen 5 l und 30 l einnimmt.

13. Sanitäreinrichtung nach einem der Ansprüche 1 bis 12, **dadurch gekennzeichnet, dass** an einer dem Hauptkörper (1) gegenüberliegenden Seite des Volumenmaterials (7) eine Standfläche gebildet ist.

14. Sanitäreinrichtung nach einem der Ansprüche 1 bis 13, **dadurch gekennzeichnet, dass** das emaillierte Stahlblech eine Blechdicke zwischen 0,1 mm und 2,5 mm, insbesondere zwischen 0,2 mm und 1,4 mm, aufweist.

15. Sanitäreinrichtung nach einem der Ansprüche 1 bis 14, **dadurch gekennzeichnet, dass** der Hauptkörper (1) die Form einer Duschfläche oder eine Sanitärwanne aufweist.

16. Sanitäreinrichtung nach einem der Ansprüche 1 bis 15, **dadurch gekennzeichnet, dass** zumindest ein Funktionselement in das Volumenmaterial (7) eingebettet ist.

17. Verfahren zur Herstellung einer Sanitäreinrichtung, insbesondere nach einem der Ansprüche 1 bis 16, wobei ein Hauptkörper (1) aus emailliertem Stahlblech bereitgestellt wird, der eine Nutzseite (2) und eine Verdecktseite (3) aufweist, wobei Partikel (8) als Schüttgut und ein unausgeährtetes Bindemittel (9) aufgebracht werden und wobei nachfolgend durch das Aushärten des Bindemittels (9) eine Volumenmaterial (7) gebildet wird, welches zumindest abschnittsweise eine zu der Verdecktseite (3) komplementäre Topografie aufweist.

18. Verfahren nach Anspruch 17, wobei sich das Volumenmaterial (7) durch das Aushärten des Bindemittels (9) stoffschlüssig mit der Verdecktseite (3) verbindet.

19. Verfahren nach Anspruch 17 oder 18, wobei das aufgebrachte Schüttgut vor dem Aushärten des Bindemittels (9) geformt wird, wobei insbesondere gegenüberliegend des Hauptkörpers (1) eine ebene Fläche gebildet wird.

20. Verfahren nach einem der Ansprüche 17 bis 19, wobei der Hauptkörper (1) während des zumindest teilweisen Aushärtens des Bindemittels (9) durch aktive Krafteinwirkung gehalten ist.

21. Verfahren nach einem der Ansprüche 17 bis 20, wobei vor dem Aushärten des Bindemittels (9) und vorzugsweise auch vor dem Aufbringen der Partikel (8) als Schüttgut ein Füllkörper (6) an der Sanitäreinrichtung angeordnet wird und wobei der Füllkörper (6) unter Ausbildung eines Freiraums in dem Volumenmaterial (7) wieder entfernt wird.
